# FASCICULE DE BREVET EUROPEEN

(11) **EP 4 244 131 B1**
(45) Date de publication et mention de la délivrance du brevet: **16.04.2025**
(21) Numéro de dépôt: 21815577.8
(22) Date de dépôt: 09.11.2021
(51) Int. Cl.: B64C 1/14

(54) **VITRAGE PINCÉ ET SON JOINT PÉRIPHÉRIQUE DE FORME LIMITANT LE GLISSEMENT PÉRIPHÉRIQUE DU VITRAGE DE SORTE À GARANTIR QU'IL NE SE DÉCHAUSSE PAS DE SA STRUCTURE DE MONTAGE**
KLEMMVERGLASUNG UND DEREN RANDDICHTUNG ZUR BEGRENZUNG DES UMFANGSGLEITVORGANGS DER VERGLASUNG OHNE ABLÖSUNG VON IHRER MONTAGESTRUKTUR
CLAMPED GLAZING AND PERIPHERAL SEAL THEREOF DESIGNED TO LIMIT PERIPHERAL SLIDING OF THE GLAZING SO AS TO ENSURE THAT IT DOES NOT BECOME DETACHED FROM ITS MOUNTING STRUCTURE

(30) Priorité: 10.11.2020 FR 2011540
(43) Date de publication de la demande: 20.09.2023
(73) Titulaire: Saint-Gobain Glass France, 92400 Courbevoie (FR)
(72) Inventeur: SAUVESTY, Jean-Charles, 45600 SULLY SUR LOIRE (FR)
(74) Mandataire: Saint-Gobain Recherche
(86) Numéro de dépôt international: PCT/FR2021/051976
(87) Numéro de publication internationale: WO 2022/101574

(56) Documents cités:
- WO-A1-2004/011249
- US-A- 2 497 957
- US-A1- 2008 067 288
- US-A1- 2010 020 381
- US-B1- 9 371 129

## Description

La présente invention concerne le domaine des vitrages de type pincé dans un encadrement, que l'on peut retrouver principalement sur les marchés aéronautique et ferroviaire. Deux principales technologies existent sur les vitrages aéronautiques, un montage type pincé et un montage type boulonné.

Le montage de type pincé montre lors de la pressurisation de l'appareil (aéronef) et éventuellement lors d'un cas de bris d'un ou deux plis de verre structuraux (en anglais : simple ou double « failsafe ») un risque que le vitrage déchausse de la structure avion avec la possibilité d'avoir une dépressurisation de la cabine liée à la fuite entre le joint et la structure avion.

A l'heure actuelle sur la majorité des structures avion, la zone de contact entre le presse glace et le joint de la glace se fait dans le même plan de forme (α=0), c'est-à-dire un plan parallèle à la surface principale du vitrage en contact avec l'atmosphère extérieure. Sur la partie inférieure, la zone de contact entre le joint du vitrage et la structure avion présente un angle β positif voire nul, c'est-à-dire dans ce dernier cas que cette zone de contact est parallèle à la surface principale du vitrage en contact avec le volume intérieur de l'aéronef. Tel est le cas du document US 2010/020381 A1.

L'invention a donc pour objectif de limiter le glissement périphérique d'un vitrage pincé dans sa structure de montage (carlingue d'un avion...) afin de garantir que le vitrage ne se déchausse pas de la structure. Cet objectif est atteint par l'invention qui a pour objet un ensemble selon la revendication 1.

Dans la présente demande, toute mention d'une partie débordante du bloc structural se réfère à une saillie du bloc structural par rapport à la feuille de protection.

Grâce à l'invention, les surfaces de pincement du vitrage forment un rétrécissement dans la direction des bords du vitrage vers sa partie centrale. Cette disposition est mise à profit en cas de déformation du vitrage, pouvant être causée par le bris d'une ou de toutes les feuilles structurales (appelées aussi plis structuraux), en limitant voire supprimant les glissements de la périphérie du vitrage sur sa structure de montage, dans une mesure telle que tout risque de déchaussement du vitrage de sa structure est ainsi supprimé.

De préférence, l'une au moins de la surface de contact de ladite première partie intercalaire et du presse-glace, et/ou de ladite seconde partie intercalaire et de la structure de montage, forme(nt) avec la surface principale du bloc structural qui lui (leur) est (sont) la plus proche, un angle compris entre -1 et - 40 °. La valeur de cet angle est définie de sorte qu'en fonction de la largeur de portée, la cote externe du joint (son épaisseur vers le bord du vitrage) soit supérieure à la cote interne du joint côté vitrage (c'est-à-dire son épaisseur totale y compris l'épaisseur du bloc structural, vers la partie centrale du vitrage), même lorsque le joint se trouve comprimé.

Ces angles négatifs peuvent être obtenus par exemple par la forme de l'empreinte du moule d'injection ou de la filière d'extrusion, co-extrusion ou lamination servant à former le joint périphérique d'une part, et par usinage du presse-glace et de la structure de montage d'autre part.

De préférence, l'une au moins de la surface de contact de ladite première partie intercalaire et du presse-glace, et/ou de ladite seconde partie intercalaire et de la structure de montage, est (sont) plane(s) ou a (ont) au moins un rayon ou une courbe.

De préférence, le bloc structural comprend deux feuilles collées l'une à l'autre par une couche adhésive intercalaire ; ces deux feuilles sont appelées feuilles structurales (éventuellement plis structuraux) et assurent la tenue et la résistance mécaniques du vitrage.

De préférence, le bloc structural est collé à la feuille de protection par une couche adhésive intercalaire.

De préférence, chaque feuille du bloc structural, et la feuille de protection sont constituées, indépendamment l'une de l'autre de verre minéral tel que sodocalcique, aluminosilicate, borosilicate, éventuellement durci, trempé thermiquement, ou renforcé chimiquement, ou de matériau polymère transparent tel que poly(méthacrylate de méthyle) (PMMA), polycarbonate (PC), poly(téréphtalate d'éthylène) (PET) ou polyuréthane (PU). Quand l'une de ces feuilles constituant une surface libre du vitrage feuilleté, c'est-à-dire la feuille de protection en contact avec l'atmosphère extérieure, ou bien la feuille structurale en contact avec le volume intérieur de l'aéronef ou du train, est en matériau polymère tel que PC, sa surface libre est avantageusement munie d'un revêtement ou vernis anti-rayure de type polysiloxane, hydrophile, hydrophobe...

De préférence, lesdites couches adhésives intercalaires sont constituées, indépendamment l'une de l'autre, de polyvinylbutyral (PVB), polyuréthane thermoplastique (TPU) ou copolymère éthylène - acétate de vinyle (EVA).

De manière commune, le vitrage feuilleté peut comprendre une couche électroconductrice chauffante reliée à une source de courant électrique par des bus-bars disposés sur deux côtés opposés du vitrage. Il peut s'agir d'une couche antigivre sur la face principale à l'intérieur de la structure feuilletée, de la feuille (notamment protectrice) destinée à être en position de montage en contact avec l'atmosphère extérieure, ou d'une couche antibuée sur la face principale à l'intérieur de la structure feuilletée, de la feuille (notamment structurale) destinée à être en position de montage en contact avec le volume intérieur du véhicule aérien ou ferroviaire. La couche antigivre ou antibuée est constituée d'oxyde d'indium dopé à l'étain (en anglais : indium tin oxide, abrégé en ITO), de métal tel qu'argent, ou équivalent.

De préférence, le joint périphérique est en matériau polymère élastomère, notamment injectable ou mis en œuvre par extrusion, tel que silicone, polyuréthane (PU), élastomère à polysulfure.

De préférence, un profilé métallique est inséré dans le joint périphérique, en recouvrement des zones auxquelles il se conforme d'une bande périphérique de la surface libre de la feuille de protection, des chants de cette dernière et de la couche adhésive intercalaire collant cette dernière au bloc structural, et du débord de la surface principale du bloc structural la plus proche de la feuille de protection. Ce profilé métallique communément désigné comme profilé « en ZED » constitue une barrière d'étanchéité, il a pour fonction d'empêcher toute humidité de pénétrer dans le vitrage feuilleté.

De préférence, une cale de rigidification est insérée dans ladite seconde partie intercalaire du joint périphérique entre la partie débordante de la surface principale du bloc structural la plus éloignée de la feuille de protection, et la structure de montage (carlingue d'avion, carrosserie de train...). Cette cale peut être en matériau composite et pleine, ou constituée d'un profilé métallique creux.

L'invention a également pour objet l'application d'un ensemble tel que décrit précédemment, à un vitrage de type pincé dans le domaine aéronautique ou ferroviaire.

L'invention sera mieux comprise à la lumière de la description suivante des dessins annexés, dans lesquels
[Fig. 1] est une vue en coupe d'un vitrage de l'état de la technique.
[Fig. 2] représente schématiquement en coupe le vitrage de la figure 1.
[Fig. 3] est une représentation schématique en coupe d'une première réalisation de l'invention.
[Fig. 4] est une représentation schématique en coupe d'une seconde réalisation de l'invention.
[Fig. 5] est une représentation schématique en coupe d'une troisième réalisation de l'invention.

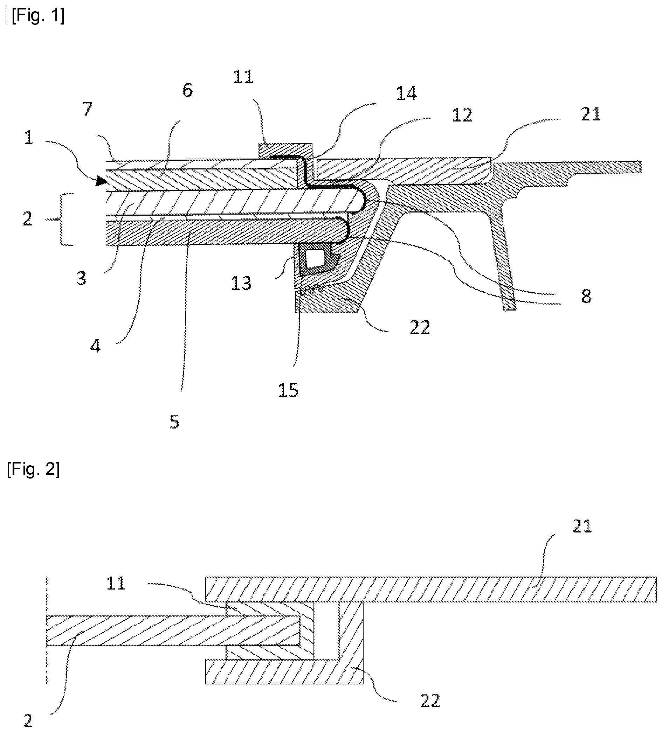

Sur la figure 1, un vitrage aéronautique 1 est constitué d'un bloc structural 2 et d'une feuille extérieure de protection 7 en verre aluminosilicate renforcé chimiquement d'épaisseur comprise entre 0,5 et 5 mm.

Le bloc structural 2 est en saillie, débordant par rapport à la feuille de protection 7, à laquelle il est collé au moyen d'une couche 6 de polyvinylbutyral (PVB) ou de polyuréthane thermoplastique (TPU) d'épaisseur comprise entre 0,2 et 10 mm.

Le bloc structural 2 est constitué d'une feuille 3 de verre flotté silicosodocalcique d'épaisseur comprise entre 1 et 30 mm, et d'une feuille 5 de polycarbonate (PC) d'épaisseur comprise entre 1 et 30 mm collées l'une à l'autre par l'intermédiaire d'une couche 4 de TPU d'épaisseur comprise entre 0,2 et 4 mm. Alternativement, lorsque la feuille 5 est en verre minéral, la couche adhésive 4 est en PVB.

Les bords arrondis des feuilles structurales 3 et 5 sont protégés par recouvrement par des bandes élastomères 8, communément désignées par le terme anglais « bumpers », qui amortissent / absorbent les chocs.

Le bord complexe du vitrage feuilleté 1 est enveloppé par un joint périphérique 11 constitué pour l'essentiel d'un matériau polymère élastomère tel que silicone, polyuréthane, polysulfure ou similaire.

Un profilé métallique 14 en ZED est intégré dans le joint périphérique 11, dans la zone d'une bande périphérique de la surface libre de la feuille de protection 7, du chant de cette dernière 7 et de la couche 6 de PVB, et d'une bande périphérique de la feuille structural 3, débordante de la feuille de protection 7. Le profilé en ZED 14 empêche la pénétration d'humidité dans la structure feuilletée 1.

D'autre part, la partie inférieure du joint périphérique 11, d'épaisseur maximale, accueille une cale 15 de rigidification constituée d'un profilé creux en aluminium.

Le vitrage feuilleté 1 est fixé à la carlingue d'un avion 22, par pincement entre celle-ci 22 et un presse-glace 21 fixé, notamment par boulonnage, à la carlingue 22. Le pincement est effectué avec interposition du joint périphérique 11, plus précisément de deux parties remarquables de celui-ci 11 : une première partie intercalaire 12 entre la partie débordante de la surface principale du bloc structural 2 la plus proche de la feuille de protection 7, et le presse-glace 21, d'une part, et une seconde partie intercalaire 13 entre la partie débordante de la surface principale du bloc structural 2 la plus éloignée de la feuille de protection 7, et la carlingue 22, d'autre part. La surface de contact de la première partie intercalaire 12 et du presse-glace 21 est parallèle à la surface principale du vitrage feuilleté 1, avec lequel elle forme donc un angle nul. La surface de contact de la seconde partie intercalaire 13 avec la carlingue 22 est sensiblement plane, formant avec la surface principale du vitrage feuilleté 1 un angle ouvert, défini ici, par convention, comme positif. En cas de déformation du vitrage feuilleté 1, due par exemple à la pressurisation de l'appareil en conditions normales d'utilisation ou causée par exemple par un bris de l'une des deux feuilles structurales 3 et 5, voire des deux, cette configuration ouverte des deux surfaces de pincement est propice au glissement périphérique du vitrage feuilleté 1 relativement à la carlingue 22 et au presse-glace 21. Le vitrage est alors susceptible de se déchausser de la carlingue, entraînant le cas échéant un risque de dépressurisation de la cabine de l'aéronef.

La figure 2 représente schématiquement une situation dans laquelle les deux surfaces de pincement sont planes et définissent deux angles nuls par rapport au vitrage feuilleté 1. Cette configuration, comme celle de la figure 1, favorise le glissement périphérique non désiré du vitrage feuilleté 1 dans sa structure de montage.

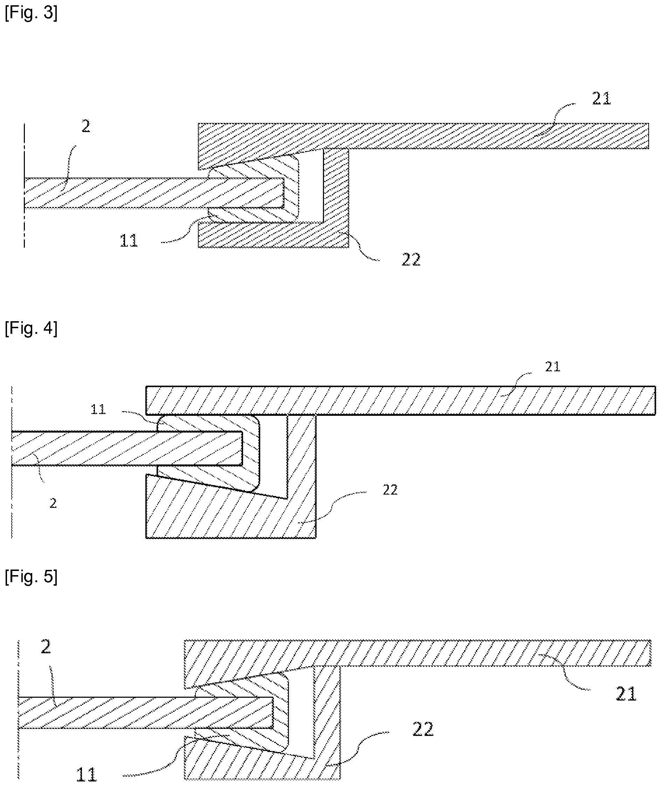

Sur la figure 3, l'une des deux surfaces de pincement, la surface de contact du joint périphérique 11 et du presse-glace 21 est plane et se rapproche du bloc structural 2 dans la direction du bord vers la partie centrale de celui-ci 2. Cette surface de contact forme par rapport au bloc structural un angle défini par convention comme négatif. L'autre surface de pincement, la surface de contact du joint périphérique 11 et de la carlingue 22, est plane et parallèle au bloc structural 2.

Sur la figure 4, c'est au contraire la surface de contact du joint périphérique 11 et de la carlingue 22 qui est plane et forme par rapport au bloc structural 2 un angle défini ci-dessus comme négatif, tandis que la surface de contact du joint périphérique 11 et du presse-glace 21 est plane et parallèle au bloc structural 2.

Sur la figure 5, ce sont les deux surfaces de pincement qui définissent un angle négatif par rapport au bloc structural 2. Dans les trois réalisations conformes à l'invention des figures 3, 4 et 5, l'une des surfaces de pincement ou les deux se rapproche(nt) du bloc structural 2 dans la direction du bord vers la partie centrale de celui-ci 2, c'est-à-dire forme(nt) un angle négatif par rapport à lui 2, de sorte que la cote extérieure (épaisseur totale) du joint périphérique 11 vers le bord du bloc structural 2 est supérieure à sa cote intérieure (son épaisseur totale, comprenant celle du bloc structural 2), vers la partie centrale du bloc structural 2. La mesure technique de l'invention est de nature à diminuer le glissement périphérique du bloc structural 2 dans sa structure de montage 22, lorsqu'il 2 est déformé, dans une mesure telle que tout déchaussement du bloc structural 2 de la structure 22 et du presse-glace 21 est supprimé.

## Revendications

1. Ensemble d'un vitrage feuilleté (1), de son joint périphérique (11), d'un presse-glace (21) de pincement du vitrage feuilleté (1) et d'une structure de montage (22), le vitrage feuilleté (1) étant constitué d'un bloc structural transparent (2) comprenant au moins une feuille (3, 5), et d'une feuille de protection (7) transparente extérieure, dans lequel le bloc structural (2) est débordant par rapport à la feuille de protection (7), le joint périphérique (11) ayant une première partie intercalaire (12) entre la partie débordante d'une surface principale du bloc structural (2) la plus proche de la feuille de protection (7), et le presse-glace (21) de pincement du vitrage feuilleté (1) pour réaliser la fixation du bloc structural à la structure de montage (22), le joint périphérique (11) ayant une seconde partie intercalaire (13) entre la partie débordante de la surface principale du bloc structural (2) la plus éloignée de la feuille de protection (7), et la structure de montage (22), **caractérisé en ce que** l'une au moins d'une surface de contact de ladite première partie intercalaire (12) et du presse-glace (21), et/ou de ladite seconde partie intercalaire (13) et de la structure de montage (22) se rapproche(nt) du bloc structural (2), depuis le bord de ce dernier (2) vers sa partie centrale.

2. Ensemble selon la revendication 1, **caractérisé en ce que** l'une au moins de la surface de contact de ladite première partie intercalaire (12) et du presse-glace (21), et/ou de ladite seconde partie intercalaire (13) et de la structure de montage (22), forme(nt) avec la surface principale du bloc structural (2) qui lui (leur) est (sont) la plus proche, un angle compris entre -1 et -40 °.

3. Ensemble selon l'une des revendications précédentes, **caractérisé en ce que** l'une au moins de la surface de contact de ladite première partie intercalaire (12) et du presse-glace (21), et/ou de ladite seconde partie intercalaire (13) et de la structure de montage (22), est (sont) plane(s) ou a (ont) au moins un rayon ou une courbe.

4. Ensemble selon l'une des revendications précédentes, **caractérisé en ce que** le bloc structural (2) comprend deux feuilles (3, 5) collées l'une à l'autre par une couche adhésive intercalaire (4).

5. Ensemble selon l'une des revendications précédentes, **caractérisé en ce que** le bloc structural (2) est collé à la feuille de protection (7) par une couche adhésive intercalaire (6).

6. Ensemble selon l'une des revendications précédentes, **caractérisé en ce que** chaque feuille (3, 5) du bloc structural (2), et la feuille de protection (7) sont constituées, indépendamment l'une de l'autre de verre minéral tel que sodocalcique, aluminosilicate, borosilicate, éventuellement durci, trempé thermiquement, ou renforcé chimiquement, ou de matériau polymère transparent tel que poly(méthacrylate de méthyle) (PMMA), polycarbonate (PC), poly(téréphtalate d'éthylène) (PET) ou polyuréthane (PU).

7. Ensemble selon les revendications 4 et 5, **caractérisé en ce que** les couches adhésives intercalaires (4, 6) sont constituées, indépendamment l'une de l'autre, de polyvinylbutyral (PVB), polyuréthane thermoplastique (TPU) ou copolymère éthylène - acétate de vinyle (EVA).

8. Ensemble selon l'une des revendications précédentes, **caractérisé en ce que** le joint périphérique (11) est en matériau polymère élastomère, notamment injectable ou mis en œuvre par extrusion, tel que silicone, polyuréthane (PU), élastomère à polysulfure.

9. Ensemble selon l'une des revendications précédentes, **caractérisé en ce qu'**un profilé métallique (14) est inséré dans le joint périphérique (11), en recouvrement des zones auxquelles il se conforme d'une bande périphérique de la surface libre de la feuille de protection (7), des chants de cette dernière (7) et de la couche adhésive intercalaire (6) collant cette dernière (7) au bloc structural (2), et du débord de la surface principale du bloc structural (2) la plus proche de la feuille de protection (7).

10. Ensemble selon l'une des revendications précédentes, **caractérisé en ce qu'**une cale de rigidification (15) est insérée dans la seconde partie intercalaire (13) du joint périphérique (11) entre la partie débordante de la surface principale du bloc structural (2) la plus éloignée de la feuille de protection (7), et la structure de montage (22).

11. Application d'un ensemble selon l'une des revendications précédentes à un vitrage de type pincé dans le domaine aéronautique ou ferroviaire.

## Patentansprüche

1. Anordnung einer Verbundverglasung (1) mit einer umlaufenden Dichtung (11), einer Scheibenhalterung (21) zum Einklemmen der Verbundverglasung (1) und einer Montagekonstruktion (22),
wobei die Verbundverglasung (1) aus einem transparenten Strukturblock (2), umfassend mindestens eine Scheibe (3, 5), und einer äußeren transparenten Schutzfolie (7) besteht, in die der Strukturblock (2) relativ zu der Schutzfolie (7) hervorsteht, wobei die umlaufende Dichtung (11) einen ersten Zwischenteil (12) zwischen dem von einer Hauptoberfläche des Strukturblocks (2) hervorstehenden Teil, der der Schutzfolie (7) am nächsten liegt, und der Scheibenhalterung (21) zum Einklemmen der Verbundverglasung (1) besitzt, um die Befestigung des Strukturblocks an der Montagekonstruktion (22) vorzunehmen, wobei die umlaufende Dichtung (11) einen zweiten Zwischenabschnitt (13) zwischen dem von der Hauptoberfläche des Strukturblocks (2) hervorstehenden Teil, der am weitesten von der Schutzfolie (7) entfernt ist, und der Montagekonstruktion (22) besitzt, **dadurch gekennzeichnet, dass** mindestens eine von der Kontaktoberfläche des ersten Zwischenteils (12) und der Scheibenhalterung (21) und/oder des zweiten Zwischenteils (13) und der Montagekonstruktion (22) dem Strukturblock (2) von dem Rand des letzteren (2) in Richtung seines Mittelteils näher kommt.

2. Anordnung nach Anspruch 1, **dadurch gekennzeichnet, dass** mindestens eine von der Kontaktoberfläche des ersten Zwischenteils (12) und der Scheibenhalterung (21) und/oder des zweiten Zwischenteils (13) und der Montagekonstruktion (22) mit der Hauptoberfläche des Strukturblocks (2), die ihr/ihnen am nächsten ist, einen Winkel zwischen -1 und -40° ausbildet.

3. Anordnung nach einem der vorstehenden Ansprüche,
**dadurch gekennzeichnet, dass** mindestens eine von der Kontaktoberfläche des ersten Zwischenteils (12) und der Scheibenhalterung (21) und/oder des zweiten Zwischenteils (13) und der Montagekonstruktion (22) eben ist/sind oder mindestens einen Radius oder eine Kurve aufweist/aufweisen.

4. Anordnung nach einem der vorstehenden Ansprüche,
**dadurch gekennzeichnet, dass** der Strukturblock (2) zwei Scheiben (3, 5) umfasst, die durch eine Klebezwischenschicht (4) miteinander verklebt sind.

5. Anordnung nach einem der vorstehenden Ansprüche,
**dadurch gekennzeichnet, dass** der Strukturblock (2) durch eine Klebezwischenschicht (6) mit der Schutzfolie (7) verklebt ist.

6. Anordnung nach einem der vorstehenden Ansprüche,
**dadurch gekennzeichnet, dass** jede Scheibe (3, 5) des Strukturblocks (2) und die Schutzfolie (7) unabhängig voneinander aus optional gehärtetem, thermisch vorgespanntem, oder chemisch verstärktem Mineralglas, wie Natronkalk, Aluminosilikat, Borosilikat, oder transparentem Polymermaterial, wie Poly(methylmethacrylat) (PMMA), Polykarbonat (PC), Poly(ethylenterephthalat) (PET) oder Polyurethan (PU), bestehen.

7. Anordnung nach Anspruch 4 und 5, **dadurch gekennzeichnet, dass** die Klebezwischenschichten (4, 6) unabhängig voneinander aus Polyvinylbutyral (PVB), thermoplastischem Polyurethan (TPU) oder einem Ethylen-Vinylacetat-Copolymer (EVA) bestehen.

8. Anordnung nach einem der vorstehenden Ansprüche,
**dadurch gekennzeichnet, dass** die umlaufende Dichtung (11) aus einem insbesondere einspritzbaren oder durch Extrusion umgesetztem elastomeren Polymermaterial, wie Silikon, Polyurethan (PU), Polysulfidelastomer, besteht.

9. Anordnung nach einem der vorstehenden Ansprüche,
**dadurch gekennzeichnet, dass** ein Metallprofil (14) in die umlaufende Dichtung (11) eingesetzt ist, indem es die Bereiche überlappt, an die es sich von einem umlaufenden Streifen der freien Oberfläche der Schutzfolie (7), der Kanten (7) dieser letzteren und der Klebezwischenschicht (6), die diese letztere (7) an dem Strukturblock (2) festklebt, und dem Überstand der Hauptoberfläche des Strukturblocks (2) anpasst, der der Schutzfolie (7) am nächsten liegt.

10. Anordnung nach einem der vorstehenden Ansprüche,
**dadurch gekennzeichnet, dass** ein Verstärkungskeil (15) in den zweiten Zwischenteil (13) der umlaufenden Dichtung (11) zwischen dem vorstehenden Teil der Hauptoberfläche des Strukturblocks (2), der am weitesten von der Schutzfolie (7) entfernt ist, und der Montagekonstruktion (22) eingesetzt ist.

11. Anwendung einer Anordnung nach einem der vorstehenden Ansprüche auf eine Verglasung einer geklemmten Art im Luftfahrt- oder Eisenbahnbereich.

## Claims

1. Assembly of laminated glazing (1), a peripheral seal (11) thereof, a windowpane retainer (21) for clamping the laminated glazing (1) and a mounting structure (22),
the laminated glazing (1) consisting of a transparent structural block (2) comprising at least one sheet (3, 5), and an external transparent protective sheet (7), wherein the structural block (2) overhangs relative to the protective sheet (7), the peripheral seal (11) having a first spacer part (12) between the overhanging part of a main surface of the structural block (2) closest to the protective sheet (7), and the windowpane retainer (21) for clamping the laminated glazing (1) in order to attach the structural block to the mounting structure (22), the peripheral seal (11) having a second spacer part (13) between the overhanging part of the main surface of the structural block (2) furthest from the protective sheet (7), and the mounting structure (22), **characterized in that** at least one of a contact surface between said first spacer part (12) and the windowpane retainer (21) and/or a contact surface between said second spacer part (13) and the mounting structure (22) approach(es) the structural block (2), from the edge of said structural block (2) toward the central part thereof.

2. Assembly according to claim 1, **characterized in that** at least one of the contact surface between said first spacer part (12) and the windowpane retainer (21) and/or the contact surface between said second spacer part (13) and the mounting structure (22), form(s) with the main surface of the structural block (2) which is/are closest to same, an angle of between -1 and -40°.

3. Assembly according to one of the preceding claims, **characterized in that** at least one of the contact surface between said first spacer part (12) and the windowpane retainer (21) and/or the contact surface between said second spacer part (13) and the mounting structure (22) is/are planar or has/have at least one radius or one curve.

4. Assembly according to one of the preceding claims, **characterized in that** the structural block (2) comprises two sheets (3, 5) bonded to one another by an adhesive interlayer (4).

5. Assembly according to one of the preceding claims, **characterized in that** the structural block (2) is bonded to the protective sheet (7) by an adhesive interlayer (6).

6. Assembly according to one of the preceding claims, **characterized in that** each sheet (3, 5) of the structural block (2), and the protective sheet (7) consist, independently of one another, of mineral glass such as soda-lime, aluminosilicate or borosilicate glass, optionally hardened, thermally tempered, or chemically strengthened, or of transparent polymer material such as poly(methyl methacrylate) (PMMA), polycarbonate (PC), polyethylene terephthalate (PET) or polyurethane (PU).

7. Assembly according to claims 4 and 5, **characterized in that** the adhesive interlayers (4, 6) consist, independently of one another, of polyvinyl butyral (PVB), thermoplastic polyurethane (TPU) or ethylene-vinyl acetate (EVA) copolymer.

8. Assembly according to one of the preceding claims, **characterized in that** the peripheral seal (11) is made of elastomeric polymer material which is, in particular, injectable or implemented by extrusion, such as silicone, polyurethane (PU), polysulfide elastomer.

9. Assembly according to one of the preceding claims, **characterized in that** a metallic profile (14) is inserted into the peripheral seal (11), covering the regions to which it conforms with a peripheral strip of the free surface of the protective sheet (7), of the edge faces of said sheet (7) and of the adhesive interlayer (6) bonding said sheet (7) to the structural block (2), and of the overhang of the main surface of the structural block (2) closest to the protective sheet (7).

10. Assembly according to one of the preceding claims, **characterized in that** a stiffening wedge (15) is inserted into the second spacer part (13) of the peripheral seal (11) between the overhanging part of the main surface of the structural block (2) furthest from the protective sheet (7), and the mounting structure (22).

11. Application of an assembly according to one of the preceding claims to a clamped-type glazing in the field of aeronautics or railways.
